# EUROPEAN PATENT APPLICATION

(11) **EP 4 507 026 A1**
(43) Date of publication of application: **12.02.2025**
(21) Application number: 24193344.9
(22) Date of filing: 07.08.2024
(51) Int. Cl.: H01M 4/1395, H01M 4/36, H01M 4/38, H01M 4/587, H01M 4/62, H01M 10/0525

(54) **SILICON-CARBON COMPOSITE NEGATIVE ELECTRODE MATERIAL CONTAINING LITHIUM-RICH LONG-CHAIN COMPOSITE SALT AND PREPARATION METHOD THEREOF**

(30) Priority: 09.08.2023 CN 202310999828
(71) Applicant: Hon Hai Precision Industry Co., Ltd., New Taipei City (TW); SolidEdge Solution Inc., Hsinchu 300 (TW)
(72) Inventor: HUANG, HAO-YUN, Hsinchu 300 (TW); CHEN, MAO-SUNG, Hsinchu 300 (TW); LAI, HONG-ZHENG, Hsinchu 300 (TW); CHANG, TSENG-LUNG, Hsinchu 300 (TW)
(74) Representative: Zaboliene, Reda

(57) **Abstract**

A silicon-carbon composite negative electrode material containing a lithium-rich long-chain composite salt, comprises a silicon-carbon composite material slurry and a lithium-rich long-chain composite salt. Each silicon-carbon composite material particle comprises an element-doped silicon-containing nanoparticle, a first carbon-based covering layer and a second carbon-based covering layer. The element-doped silicon-containing nanoparticle is a core, the first carbon-based covering layer is coated on a surface of the element-doped silicon-containing nanoparticle, the second carbon-based covering layer is coated on the first carbon-based covering layer. The lithium-rich long-chain composite salt comprises a plurality of composite ion bridging structures. A method for preparing the silicon-carbon composite negative electrode material containing a lithium-rich long-chain composite salt is further provided.

## Description

### CROSS-REFERENCE TO RELATED APPLICATIONS

This application claims all benefits from China Patent Application No. 202310999828.1, filed on August 9, 2023, in the China Intellectual Property Office, the contents of which are hereby incorporated by reference.

### FIELD

The present disclosure relates to a silicon-carbon composite negative electrode material containing lithium-rich long-chain composite salt and preparation method thereof.

### BACKGROUND

Since the lithium metal anode has a high theoretical gram capacity (3860mAh*g-1) and a low electrochemical potential (-3.04 V), it is considered to be the best choice for anode of lithium-ion secondary batteries. However, due to the high reactivity of lithium metal, it is easy to spontaneously form a heterogeneous and fragile solid electrolyte interface (SEI), and at the same time promote the dendrite growth of the needle-like structure, the ensuing problem is the cracking of the lithium metal structure and the produce continuous side reactions with electrolytes. The continuous side reactions will lead to a decrease in battery cycle and coulombic efficiency, eventually causing battery short circuit and battery combustion. Therefore, how to effectively inhibit the growth of dendrites and prolong the cycle life of the battery has become an important topic in the application and research fields of lithium-ion secondary batteries. In the prior art, methods for stabilizing lithium metal comprise: first, using liquid electrolyte additives to form a good-quality SEI layer, which not only promotes the conduction of lithium ions but also protects the surface of lithium metal electrodes. However, this method of penetrating additives can only be used in liquid electrolytes, and cannot be effective for all-solid-state lithium-ion secondary batteries. Second, the solid electrolyte of oxide-related materials is directly used as a physical barrier layer to protect the lithium metal surface and inhibit dendrite formation. However, since solid-state electrolytes with high ionic conductivity still need time to mature and process, and the compatibility between oxide electrolytes and lithium metal is very low, this method cannot immediately become the mainstream of the industry.

### BRIEF DESCRIPTION OF THE DRAWINGS

Implementations of the present technology will now be described, by way of example only, with reference to the attached figures, wherein:
FIG1 is a schematic diagram of a structure of a lithium-rich long-chain composite salt entangled on silicon-carbon composite material particles in a silicon-carbon composite negative electrode material containing a lithium-rich long-chain composite salt provided in an embodiment of the present disclosure.
FIG2 is a schematic diagram of the structure of silicon-carbon composite material particles provided in an embodiment of the present disclosure.
FIG3 is a schematic diagram of a lithium-rich long-chain composite salt entangled with each other to form different long-chain structures provided in an embodiment of the present disclosure.

### DETAILED DESCRIPTION

The disclosure is illustrated by way of example and not by way of limitation in the figures of the accompanying drawings in which like references indicate similar elements. It should be noted that references to "another," "an," or "one" embodiment in this disclosure are not necessarily to the same embodiment, and such references mean "at least one."

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts have been exaggerated to better illustrate details and features of the present disclosure.

Several definitions that apply throughout this disclosure will now be presented.

The term "substantially" is defined to be essentially conforming to the particular dimension, shape, or other feature which is described, such that the component need not be exactly or strictly conforming to such a feature. The term "comprise," when utilized, means "comprise, but not necessarily limited to"; it specifically indicates open-ended inclusion or membership in the so-described combination, group, series, and the like.

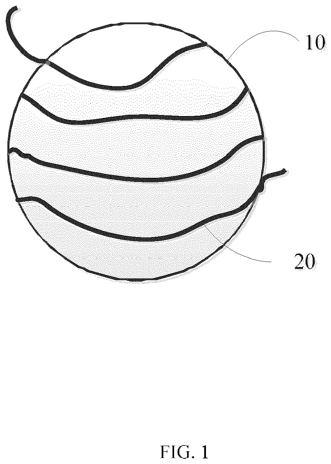

The embodiment of the present disclosure provides a silicon-carbon composite negative electrode material containing a lithium-rich long-chain composite salt. The silicon-carbon composite negative electrode material containing a lithium-rich long-chain composite salt comprises a plurality of silicon-carbon composite material particles and a lithium-rich long-chain composite salt. Referring to FIG1, a molecular structure of the lithium-rich long-chain composite salt 20 is a long chain, which can wind around a surface of a silicon-carbon composite material particle 10.

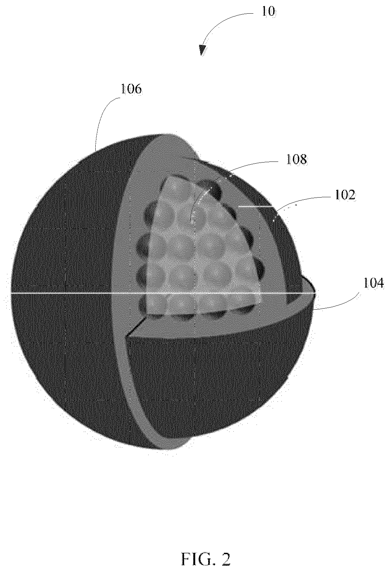

Referring to FIG2, the silicon-carbon composite material particle 10 comprises a silicon nanoparticle 102, a first carbon-based covering layer 104, a second carbon-based covering layer 106, and an elastic coating layer (not shown). The silicon nanoparticle 102 is a core, the first carbon-based covering layer 104 covers on the surface of the silicon nanoparticle 102, the second carbon-based covering layer 106 covers the first carbon-based covering layer 104, and the elastic coating layer covers the second carbon-based covering layer 106. The silicon nanoparticle 102 comprises a silicon matrix (not labeled) and a doping element 108 located in the silicon matrix. The doping element 108 is one or more of group IIIA elements, group VA elements or transition metal elements.

The particle size of the silicon-carbon composite material particle 10 is in a range from 10 microns to 20 microns. The shape of the silicon-carbon composite material particle 10 can be spherical or quasi-spherical. The quasi-spherical shape means that its shape is close to a sphere, but not a strict sphere, and is an irregular shape. The particle size of the silicon nanoparticle 102 is in a range from 10 nanometers to 100 nanometers.

The doping elements 108 can be a group IIIA element, such as boron (B), aluminum (Al), gallium (Ga), indium (In), thallium (Tl), germanium (Ge), tin (Sn) or lead (Pb). The doping elements 108 can also be VA group elements, such as nitrogen (N), phosphorus (P), arsenic (As), tellurium (Sb) or bismuth (Bi). The doping elements 108 can also be transition metal elements, such as scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag) or cadmium (Cd), etc. The element doping can reserve space in the silicon lattice. When the element-doped silicon-carbon composite negative electrode material is used as the negative electrode, during the cycle, the doping elements 108 can provide a buffer space required for the volume expansion of the silicon material, Therefore, the cycle performance of the element-doped silicon-carbon composite negative electrode material is greatly improved. Each element-doped silicon-carbon composite negative electrode material particle 10 can only comprise one kind of doping element, or can comprise two or more kinds of doping elements.

In a certain embodiment, the silicon-carbon composite negative electrode material is essentially free of silicon oxide.

In a certain embodiment, a mass percentage of silicon oxide in the silicon-carbon composite negative electrode material is less than or equal to 0.1%.

In a certain embodiment, the silicon-carbon composite negative electrode material contains no oxide or almost no oxide.

In a certain embodiment, the silicon-carbon composite material particle 10 consists of silicon nanoparticles 102, a first carbon-based covering layer 104, a second carbon-based covering layer 106 and an elastic coating layer.

In a certain embodiment, the silicon-carbon composite negative electrode material is substantially free of oxides, so when the silicon-carbon composite negative electrode material is used as a negative electrode, there is no irreversible oxide to increase the consumption of lithium ions during the charge and discharge cycle, thereby improving the efficiency of the battery.

A material of the first carbon-based covering layer 104 comprises at least one of pitch, graphite and graphene. The first carbon-based covering layer 104 covers the element-doped silicon-containing nanoparticle 102, which can suppress volume expansion and reduce volume effect. A material of the second carbon-based covering layer 106 comprises at least one of carbon black, carbon nanotubes and carbon nanofibers. The second carbon-based covering layer 106 covers the first carbon-based covering layer 104. Compared with the first carbon-based covering layer 104, the second carbon-based covering layer 106 has a higher electrical conductivity, and the second carbon-based covering layer 106 can provide charge transfer to increase the capacity of the battery.

The material of the elastic coating layer comprises a conductive material and an organic compound matrix, and the conductive material is distributed in the organic compound matrix. The conductive material comprises one or more of natural graphite, artificial graphite, intermediate phase spherical graphite, expanded graphite, graphene and carbon nanotubes. The organic compound comprises one or more of polyvinyl pyrrolidone (PVP), polyvinyl alcohol (PVA), polyphthalamide (PPA), polyacrylic acid (PAA) and sodium dodecylbenzene sulfonate (SDBS). Preferably, the organic compound contains a carboxylic acid functional group (COOH), an amide functional group (CONH₂) or an ester functional group (COOR). More preferably, the organic compound contains a carboxylic acid functional group (COOH).

The lithium-rich long-chain composite salt 20 comprises a cation, a first anion group and a second anion group, wherein the cation comprises a lithium ion. The first anion group and the second anion group mutually bonded to form the composite ion bridging structure through a plurality of cations. The plurality of cations can be only lithium ions, or can further comprise other cations other than lithium ions, such as one or more of H⁺, Li⁺, Na⁺, K⁺, and NH4⁺. The first anion group comprises one or more of a carboxylic acid functional group (COOH), an amide functional group (CONH₂), an ester functional group (COOR), full/semiacetal, full/semiketal, and a conjugate acid-base pair of the above groups. The second anion group comprises one or more of a phosphate, a carbonate, a nitrate, a nitrate, and a sulfate.

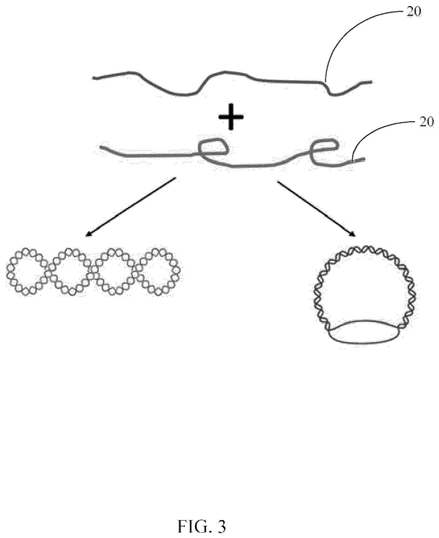

The composite ion bridging structure is composed of a cation and a first anion group and a second anion group, wherein the cation is located in the middle position, and the two ends are respectively connected to the first anion group and the second anion group to form a long chain bridging structure. Therefore, the lithium-rich long-chain composite salt 20 has a long-chain structure. Please refer to FIG. 3, the molecules of the two long-chain lithium-rich long-chain composite salts 20 can also be entangled or twisted into a variety of secondary topological structures.

The silicon-carbon composite negative electrode material containing lithium-rich long-chain composite salts can further comprise conductive carbon particles, and the conductive carbon particles comprise carbon black, Super P, Ketjen black and carbon nanotubes.

The silicon-carbon composite negative electrode material containing lithium-rich long-chain composite salts is a slurry. A solvent of the slurry can be an organic solvent or water, or a mixture thereof. The silicon-carbon composite negative electrode material containing lithium-rich long-chain composite salts is prepared by a slurry mixing method.

The silicon-carbon composite negative electrode material containing lithium-rich long-chain composite salt provided by the present disclosure has the following advantages: the salt bridge structure formed in the slurry can effectively enhance the coulomb cycle efficiency, and the overall configuration of the silicon-carbon composite material particles is stabilized by the long-chain polymer structure; since the lithium-rich long-chain composite salt generates a salt with a bridge structure, it has a better lithium replenishment effect and can replenish the dead lithium reduced by the cycle. At the same time, since the salt forming the bridge structure has a long-chain structure, the entire negative electrode material has a better stability.

One embodiment of the present disclosure further provides a method for preparing a silicon-carbon composite negative electrode material containing a lithium-rich long-chain composite salt, which comprises the following steps:
S1: preparing negative electrode slurry containing a silicon-carbon composite material;
S2: providing a polymer and a lithium salt, wherein the polymer comprises a cation and a first anion group, and the lithium salt comprises a second anion group;
S3: adding the lithium salt to the polymer to form a lithium-rich long-chain composite salt; and
S4: mixing the lithium-rich long-chain composite salt with the negative electrode slurry to form the silicon-carbon composite negative electrode material containing the lithium-rich long-chain composite salt.

Each step of preparing the silicon-carbon composite negative electrode material containing a lithium-rich long-chain composite salt provided by the embodiment of the present disclosure will be described in detail.

The step S1 specifically comprises the following steps:
S11: sintering a negative electrode slurry containing silicon-carbon composite material; and
S12: adding the sintered negative electrode material to a solution containing a molecule compound solution to obtain a mixture; and
S13: adding an SEI modifier, a phosphate flame retardant and conductive particles to the above mixture and them mixing to obtain a silicon-carbon composite negative electrode slurry.

In step S11, the silicon-carbon composite negative electrode material comprises a plurality of silicon-carbon composite material particles. The structure of the silicon-carbon composite material particles is the same as the structure of the silicon-carbon composite material particles 20 described above. The silicon-carbon composite negative electrode material is in a powder form. The sintering step of the silicon-carbon composite negative electrode material is performed in a reducing atmosphere or a vacuum environment, and the sintering temperature is in a range of 500 °C~1200 °C. In some embodiments, the reducing atmosphere comprises a nitrogen-hydrogen mixture. Sintering in a reducing atmosphere can remove excess functional groups on the surface of the material, increase the compactness and integrity of the carbon substrate coating, and the reducing atmosphere can also prevent silicon from being oxidized (no oxide). The sintering step can be beneficial to further reduce the specific surface area of the silicon-carbon composite material particles, reduce the agglomeration phenomenon of the slurry mixing process, and introduce nitrogen atoms to produce N-C bonds, which can effectively improve the electronic adsorption force between nano-silicon and the supported carbon material, and can remove the functional groups on the surface of the material that are prone to lithium trapping.

In step S12, the molecular compound solution is obtained by dissolving the molecular compound in an organic solvent. The molecular compound comprises at least one of polyvinyl pyrrolidone (PVP), polyvinyl alcohol (PVA), polyphthalamide (PPA), polyacrylic acid (PAA) and sodium dodecylbenzene sulfonate (SDBS). The molecular compound can contain a carboxylic acid functional group (COOH), an amide functional group (CONH2) or an ester functional group (COOR). The organic solvent comprises at least one of diethylene glycol, N-methylpyrrolidone, polyethylene glycol, propylene glycol or dimethyl sulfoxide. A mass percentage concentration of the molecular compound solution is in a range from 1% to 10%.

In step S13, the SEI modifier comprises at least one of LiNO₃, Li₃PO₄, LiF, LiOH, LiTFSI or LiFSI. The conductive particles can be at least one of carbon black, Super P, and Ketjen black.

In step S2, the polymer comprises a first anion group. The atomic mass of the polymer is between 103 and 109 Daltons. The first anion group comprises one or more of a carboxylic acid functional group (COOH), an amide functional group (CONH₂), an ester functional group (COOR), a full/hemiacetal, a full/hemiketal and a conjugate acid-base pair of the above groups. The polymer contains cations, which can be H⁺. According to actual needs, H⁺ in the polymer can be replaced by Li⁺, (necessarily) Na⁺, K⁺, and NH4⁺. Therefore, the cations in the polymer comprise one or more of H⁺, Li⁺, Na⁺, K⁺, and NH4⁺. The polymer can also act as a binder.

In step S2, the anion of the lithium salt is a second anion group, and the second anion group comprises at least one of phosphate, carbonate, nitrate, nitrate, and sulfate. A preparation method of the lithium salt comprises: mixing and stirring lithium hydroxide with an acidic solution containing a second anion group under a controllable specific temperature and atmosphere, stirring until a temperature of the mixed solution no longer changes, and then extracting and purifying the reacted solution to obtain lithium salt. The salts can be in solid or solution state according to needs, and can present different crystal forms due to process parameters. The specific temperature ranges from 15 to 55 degrees Celsius. The atmosphere is under a protective gas and normal pressure environment. In this embodiment, the protective gas is nitrogen.

In step S3, the polymer and the lithium salt are mixed to form a lithium-rich long-chain composite salt. After mixing, the first anion group in the polymer, the second anion group in the lithium salt and the cation in the mixed solution form a bridging structure, wherein the cation is located in the middle position, and the first anion group and the second anion group are linked to the ends of the cation respectively to form a long-chain bridging structure. Therefore, the molecular structure of the lithium-rich long-chain composite salt is a long-chain structure.

In step S4, after the long-chain lithium-rich long-chain composite salt is added, it is stirred evenly. The lithium-rich long-chain composite salt will entangle the silicon-carbon composite material particles, fix the physical structure, form a composite ion bridge and form a solid electrolyte interface rich in lithium ions to stabilize the interface chemical properties. This interface has both the long-chain physical structure protection and the chemical stability of multi-functional groups.

After the silicon-carbon composite negative electrode material containing lithium-rich long-chain composite salt is prepared, the silicon-carbon composite negative electrode material containing lithium-rich long-chain composite salt can be further coated, rolled and dried to obtain a silicon-carbon composite negative electrode that can inhibit cyclic expansion.

In this embodiment, the silicon-carbon composite negative electrode material, the conductive agent and the binder with a mass percentage of 93:1:6 are dissolved in a solvent to obtain a mixture, and the solid content is controlled at 50%, and stage slurry mixing is performed. The slurry product is applied to the copper foil at a thickness of 50-200 µm at a speed of 0.1 cm/s, and then placed in a 50-100 degree Celsius oven for 10 minutes. After rolling to a specific thickness, the electrode pieces of a fixed area are cut out, and the conductivity and SEM observation are measured to check the specifications. The qualified negative electrode pieces and ternary positive electrode pieces are used in conventional production processes with 1 mol/L LiPF₆/EC+DMC+EMC (v/v=1:1:1) electrolyte and Celgard 2400 diaphragm for soft pack battery stacking and 5Ah assembled battery for electrical specification testing.

First efficiency test: The negative electrode and lithium metal are assembled into a half-cell. After the assembly is completed and placed for 24 hours, a cyclic charge and discharge test is performed. The battery is first degassed after being half-saturated (3.6V), and then charged to 4.3V; then the first discharge is performed to 3.0V, and the first coulomb efficiency is calculated. Then the capacity retention rate is calculated by 1C cycle. The results of a comparative test are shown in Table 1 and Table 2.

**Table 1**

| Batch | Group (half-cell) | First effect (%) | Difference (%) |
|---|---|---|---|
| A | Lithium-rich long-chain composite salt | 91.39 | 0.44 |
| | Comparing group (no salt bridging) | 90.95 | |
| B | Lithium-rich long-chain composite salt | 91.79 | 3.23 |
| | Comparing group (no salt bridging) | 88.56 | |

**Table 2**

| Batch | Group (half-cell) | First effect (%) | Difference (%) |
|---|---|---|---|
| A | Lithium-rich long-chain composite salt 1 | 88.25 | 6.82 |
| | Comparing group (no salt bridging) | 81.43 | |
| B | Lithium-rich long-chain composite salt 2 | 88.05 | 6.62 |
| | Comparing group (no salt bridging) | 81.43 | |

Cycle test: The negative electrode and the ternary positive electrode are assembled into a full battery. After the assembly is completed and placed for 24 hours, a cycle charge and discharge test is performed. The battery is first half-full (3.6V) and then degassed, and then charged to 4.3V; then the first discharge is performed to 3.0V, and the first coulomb efficiency is calculated. Then the cycle is performed at 1C for 100 cycles, and the coulomb efficiency of each cycle is calculated. The comparative test results are shown in Table 3.

**Table 3**

| Batch | group (Full battery) | First effect (%) | CE maximum value (%) 3-10 cycles | CE minimum value (%) 3-10 cycles | CE maximum value (%) 11-20 cycles | CE minimum value (%) 11-20 cycles | CE≤99% |
|---|---|---|---|---|---|---|---|
| C | Lithium-rich long-chain composite salt 1 | 81.98 | 99.05 | 98.18 (rising) | 99.20 | 99.07 | 37cycles |
| C | Comparing group (no salt bridging) | 81.53 | 99.44 | 98.05 (rising) | 99.10 | 98.99 | 14cycles |

It can be seen from Tables 1 and 2 that, when the negative electrode prepared by the silicon-carbon composite negative electrode material containing lithium-rich long-chain composite salt provided in the embodiment of the present disclosure is used, the battery has a higher first-round efficiency. The first coulomb efficiency shows that the first efficiency of the battery material using lithium-rich long-chain composite salt is better than that of the general control group, indicating that the composite layer has achieved the effect of inhibiting decay. The long cycle retention rate indicates that the long-chain composite structure has the effect of stabilizing the structure of the silicon-carbon material. In the future, a variety of salt additives or make different types of modifications to the long-chain functional groups can be tried in order to improve the overall physical and chemical properties of the negative electrode.

It is to be understood that the above-described embodiments are intended to illustrate rather than limit the present disclosure. Variations may be made to the embodiments without departing from the spirit of the present disclosure as claimed. Elements associated with any of the above embodiments are envisioned to be associated with any other embodiments. The above-described embodiments illustrate the scope of the present disclosure but do not restrict the scope of the present disclosure.

Depending on the embodiment, certain of the steps of a method described may be removed, others may be added, and the sequence of steps may be altered. The description and the claims drawn to a method may comprise some indication in reference to certain steps. However, the indication used is only to be viewed for identification purposes and not as a suggestion as to an order for the steps.

## Claims

1. A silicon-carbon composite negative electrode material containing a lithium-rich long-chain composite salt, comprising:
a silicon-carbon composite material slurry comprising a plurality of silicon-carbon composite material particles, each of the silicon-carbon composite material particles comprising an element-doped silicon-containing nanoparticle, a first carbon-based covering layer and a second carbon-based covering layer, wherein the element-doped silicon-containing nanoparticle is a core, the first carbon-based covering layer covers the element-doped silicon-containing nanoparticle, the second carbon-based covering layer covers the first carbon-based covering layer, and a doping element comprises at least one of group IIIA elements, group VA elements and transition metal elements; and
a lithium-rich long-chain composite salt comprising a plurality of composite ion bridging structures, each of the plurality of composite ion bridging structures comprising a plurality of cations, a first anion group and a second anion group, wherein the first anion group and the second anion group mutually bonded to form the composite ion bridging structure through the plurality of cations, and the plurality of cations comprise lithium ions.

2. The silicon-carbon composite negative electrode material of claim 1, wherein the silicon-carbon composite material being essentially free of silicon oxide.

3. The silicon-carbon composite negative electrode material of claim 1, wherein the plurality of cations comprise ammonia ions, hydrogen ions, lithium ions, sodium ions or potassium ions.

4. The silicon-carbon composite negative electrode material of claim 1, wherein the first anion group comprises at least one of a carboxylic acid functional group (COOH), an amide functional group (CONH₂), an ester functional group (COOR), a full/hemiacetal, and a full/hemiketal.

5. The silicon-carbon composite negative electrode material of claim 1, wherein the second anion group comprises at least one of a phosphate, a carbonate, a nitrate, a nitrate and a sulfate.

6. The silicon-carbon composite negative electrode material according to one of claims 1 to 5, wherein the first anion group and the second anion group are linked to the ends of the cation respectively to form a long chain bridging structure.

7. The silicon-carbon composite negative electrode material of claim 6, wherein the lithium-rich long-chain composite salt is wound on surfaces of the silicon-carbon composite material particles.

8. The silicon-carbon composite negative electrode material of claim 7, wherein the lithium-rich long-chain composite salt is entangled or twisted into a variety of secondary topological structures.

9. The silicon-carbon composite negative electrode material of claim 1, further comprising an elastic coating layer which is covered over the carbon-based covering layer, and the elastic coating layer comprises a conductive material and an organic compound matrix, the conductive material is distributed in the organic compound matrix, and the conductive material comprises one or more of natural graphite, artificial graphite, intermediate phase spherical graphite, expanded graphite, graphene and carbon nanotubes, and the organic compound contains a carboxylic acid functional group (COOH), an amide functional group (CONH₂) or an ester functional group (COOR).

10. A method for preparing a silicon-carbon composite negative electrode material containing a lithium-rich long-chain composite salt, comprising:
S1: preparing a negative electrode slurry containing silicon-carbon composite material;
S2: providing a polymer and a lithium salt, wherein the polymer comprises a cation and a first anion group, and the lithium salt comprises a second anion group;
S3: adding the lithium salt to the polymer to form a lithium-rich long-chain composite salt; and
S4: mixing the lithium-rich long-chain composite salt with the negative electrode slurry to form the silicon-carbon composite negative electrode material containing the lithium-rich long-chain composite salt.

11. The method of claim 10, wherein the step S1 comprises:
sintering a negative electrode slurry containing silicon-carbon composite material
adding the sintered negative electrode material to a solution containing a molecule compound solution, to obtain a mixture;
adding a SEI modifier, a phosphate flame retardant and conductive particles to the mixture and then mixing, to obtain a silicon-carbon composite negative electrode slurry.

12. The method of claim 11, wherein the negative electrode material is sintered at a temperature ranged of 500 °C~1200 °C in a reducing atmosphere or a vacuum environment.

13. The method of claim 11, wherein the molecular compound solution is obtained by dissolving the molecular compound in an organic solvent, and a mass percentage concentration of the molecular compound solution is in a range from 1 % to 10 %.

14. The method of claim 11, wherein the SEI modifier comprises at least one of LiNO₃, Li₃PO₄, LiF, LiOH, LiTFSI and LiFSI.

15. The method according to one of claims 10 to 14, wherein a method for preparing the lithium salt comprises: reacting lithium hydroxide with an acidic solution containing the second anion group to obtain a solution, and then extracting and purifying the solution to obtain the lithium salt.
